# EUROPEAN PATENT APPLICATION

(11) **EP 1 986 417 A1**
(43) Date of publication of application: **29.10.2008**
(21) Application number: 08100264.4
(22) Date of filing: 09.01.2008
(51) Int. Cl.: H04N 1/60

(54) **Method and apparatus for displaying images having wide color gamut**

(30) Priority: 25.04.2007 KR 20070040473
(71) Applicant: Samsung Electronics Co., Ltd, Suwon-si, Gyeonggi-do 442-742 (KR)
(72) Inventor: Im, Na-ri, Gyeonggi-do (KR); Shin, Yoon-cheol, Seoul (KR); Um, Kyu-hoi, Gyeonggi-do (KR)
(74) Representative: Clark, David James

(57) **Abstract**

A method of and apparatus for displaying an image having a wide color gamut are provided. The method includes: receiving a first image of a first color gamut (802); generating an intermediate image by reducing pixel values of the first image (804); converting the intermediate image into a second image of a second color gamut (806); displaying the second image on a display apparatus (808); and adjusting a brightness of the display apparatus (810).

## Description

### BACKGROUND OF THE INVENTION

### 1. Field of the Invention

Methods and apparatuses consistent with the present invention relate to displaying an image, and more particularly but not exclusively, to displaying an input image having relatively a wide color gamut on a display apparatus having a relatively narrow color gamut.

### 2. Description of the Related Art

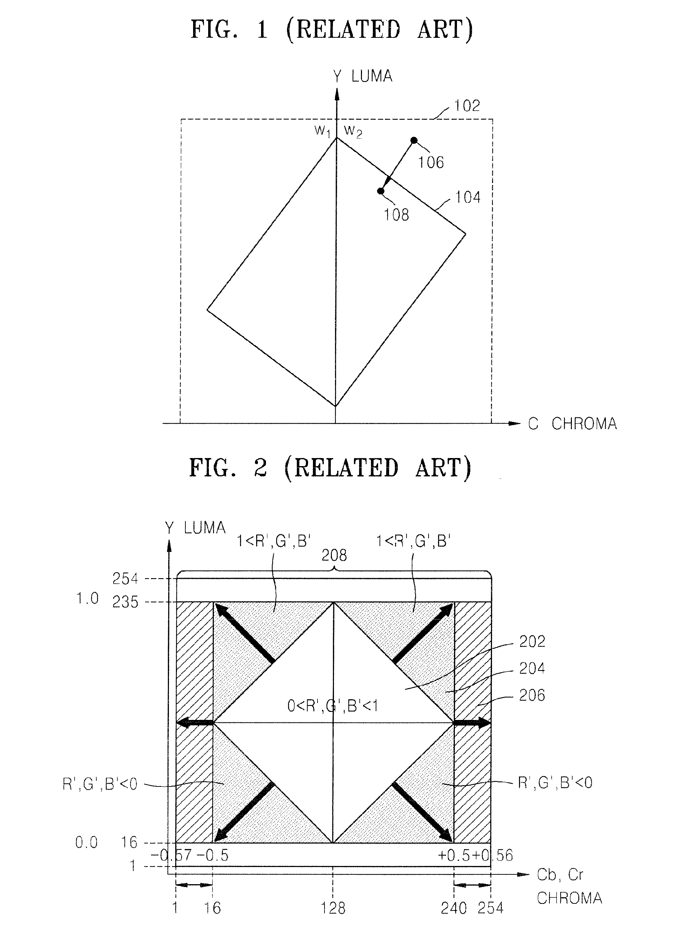

FIG. 1 is a diagram illustrating color gamuts of an input signal and a display apparatus according to related art technology.

While display apparatuses such as computer monitors, use three color elements of red (R), green (G), and blue (B), i.e., an RGB color format, an image received through broadcasting and the like uses a YCC format. The YCC format includes Y-Cr-Cb and Y-RY-BY, wherein Y is luminance, Cb is blue chroma, Cr is red chroma, RY is red minus luminance, and BY is blue minus luminance. The RGB format is a digital format and the YCC format is an analog format.

Both the RGB format and the YCC format are used for expressing colors, but the color gamuts are different from each other. It is possible to convert a color format into the other between the RGB format and the YCC format through calculation. However, if a signal of the YCC format is converted into the RGB format, it is found that some colors cannot be expressed in the RGB format. Accordingly, in order to process these colors, a related art display apparatus clips the colors that cannot be expressed by the display apparatus, or maps the colors to approximate values.

This conversion between different color gamuts will now be explained with reference to FIG. 1.

FIG. 1 is a diagram illustrating color gamuts of an input signal and a display apparatus according to related art technology.

A color gamut 102 illustrates the whole range of the input signal.

A color gamut 104 illustrates the color gamut that the display apparatus can reproduce.

In FIG. 1, w₁ indicates the luminance of a white color component of the input signal, and w₂ indicates the brightness of a white color component of the display apparatus. If the magnitudes of w₁ and w₂ are made to be the same as each other and expressed, then, it can be seen that only a limited amount of the color gamut of the input image can be reproduced by the display apparatus.

A color 106 is outside the color gamut that the display apparatus can reproduce.

A color 108 is a color of a different color in the color gamut which is approximate to the color of the color 106. The color 108 is obtained by mapping the signal 106 according to a color gamut mapping algorithm.

That is, if a color outside the color gamut that can be reproduced by the display apparatus is input, the display apparatus cannot accurately express the input signal, and according to the color gamut mapping algorithm, the display apparatus expresses the input color as a different color in the color gamut which is approximate to the input color.

Accordingly, when a related art display apparatus cannot support the color gamut of an input image, the color gamut that can be expressed is limited and colors may not be expressed or incorrect colors are expressed.

Display apparatuses with wide color gamuts are being expanded in the market and image pickup apparatuses supporting this are also being developed. Extended video YCC (xvYCC) which is an abbreviation of 'extended YCC colorimetry for video applications', is a color standard approved by the International Electrotechnical Commission (IEC), and is designed with the purpose of updating a color spectrum expressed on a television screen to cope with high definition (HD). While BT.709-5 which is a related art standard being used defines the gamut of red, green, and blue, the xvYCC expands the color gamut and adds cyan and a shade of bright green, thereby enabling more natural color expression.

The color gamuts of the RGB, YCC, and xvYCC will now be compared with each other and explained with reference to FIG. 2.

FIG. 2 is a diagram illustrating color gamuts of the xvYCC and the related art RGB format according to related art technology.

A color gamut 202 is the color gamut of a standard RGB (sRGB) format. BT.709-5 is a broadcasting format, and uses the sRGB format as its color format. A display apparatus supporting the sRGB can express only a color within the color gamut.

A color gamut 204 is the color gamut of the YCC format. Conversion between the YCC format and the sRGB format can be performed through calculation, but a range outside the color gamut of the sRGB format exists as the dark part of the color gamut 204. Accordingly, a display apparatus supporting the sRGB cannot express all colors of the YCC format.

A color gamut 206 is the color gamut of the xvYCC format. The xvYCC format can define a wider color space than that of the YCC format or the sRGB format. As a result, if a signal of the xvYCC format is input to a display apparatus supporting the related art sRGB format, colors outside the color gamut 202 cannot be correctly expressed or may be clipped and not be expressed, or may be mapped to approximate values and expressed as distorted colors. Accordingly, an ordinary display apparatus may not be able to correctly reproduce a signal of the xvYCC format which is the new image signal format, due to the limitation of the color gamut.

### SUMMARY OF THE INVENTION

Example embodiments of the present invention aim to provide a display method and apparatus for displaying an input image having a wide color gamut on a related art display apparatus, by which the image of a signal format having a wide color gamut such as xvYCC, can be expressed in rich and accurate colors on a display apparatus having a narrow color gamut.

The present invention uses a signal processing method and a method of electrically using a related art display apparatus instead of requiring replacing the display apparatus itself with a display apparatus supporting a new format in order to express an input image having a wide color gamut.

According to an aspect of the present invention, there is provided a method of displaying an image having a wide color gamut including: receiving an image of a first color gamut; generating an intermediate image by reducing the pixel values of the input image; converting the intermediate image into an image of a second color gamut; displaying the converted image on a display apparatus; and adjusting the brightness of the display apparatus.

The first color gamut may be wider than the second color gamut, and in the adjusting of the brightness of the display apparatus, the brightness of the display apparatus may be increased.

The color format of the input signal may include an xvYCC.

The color format of the output signal may include an sRGB format.

In the generating of the intermediate image, the pixel values of the input image may be linearly reduced by α (0< α <1).

In the adjusting of the brightness of the display apparatus, the brightness may be linearly adjusted by α.

The display apparatus may use at least one of a liquid crystal display (LCD), a cathode ray tube (CRT), and a plasma display panel (PDP).

In the adjusting of the brightness of the display apparatus, when the display apparatus uses a backlight, the strength of the light output of the backlight may be adjusted.

In the adjusting of the brightness of the display apparatus, when the display apparatus uses a CRT, the amount of electrons in the CRT may be adjusted.

In the adjusting of the brightness of the display apparatus, when the display apparatus uses a PDP, the voltage of the PDP may be adjusted.

According to another aspect of the present invention, there is provided an apparatus for displaying an image having a wide color gamut including: an image input unit receiving an image of a first color gamut; a signal reduction unit generating an intermediate image by reducing the pixel values of the input image; a conversion unit converting the intermediate image into an image of a second color gamut; a display unit displaying the converted image on a display apparatus; and a control unit adjusting the brightness of the display apparatus.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram illustrating color gamuts of an input signal and a display apparatus according to related art technology;
FIG. 2 is a diagram illustrating color gamuts of extended video YCC (xvYCC) and a related art RGB format according to related art technology;
FIG. 3 is a diagram illustrating a process of reducing a color gamut by reducing the pixel values of an input image according to an exemplary embodiment of the present invention;
FIG. 4 is a diagram illustrating an area in which a difference between the pixel values before and after reduction of an input image occurs according to an exemplary embodiment of the present invention;
FIG. 5 is a diagram illustrating a process of increasing luminance of a converted image by increasing the brightness of a display apparatus according to an exemplary embodiment of the present invention;
FIG. 6 is a diagram illustrating a result in which a color gamut is expanded by increasing the brightness of a display apparatus according to an exemplary embodiment of the present invention;
FIG. 7 is a diagram illustrating an apparatus for displaying an image with a wide color gamut according to an exemplary embodiment of the present invention; and
FIG. 8 is a flowchart illustrating a method of displaying an image with a wide color gamut according to an exemplary embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown.

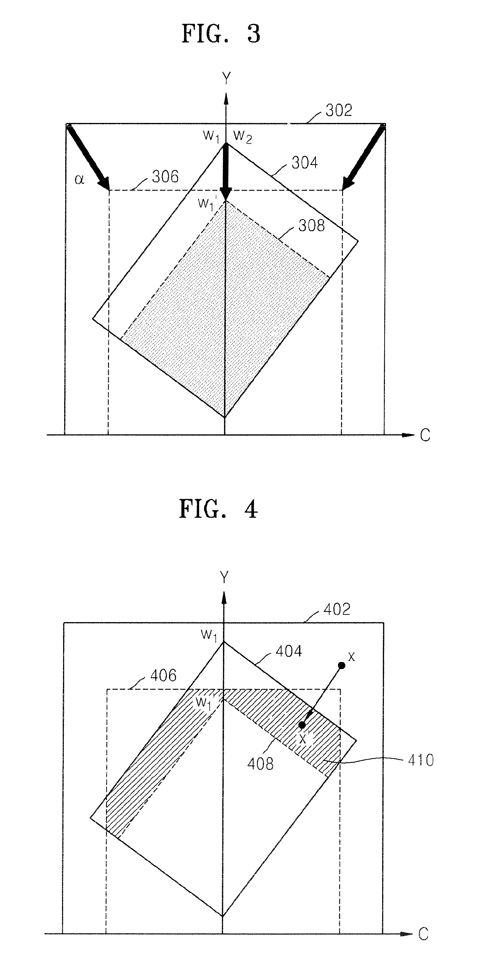

FIG. 3 is a diagram illustrating a process of reducing a color gamut by reducing the pixel values of an input image according to an exemplary embodiment of the present invention.

FIG. 3 relates to an operation for generating an intermediate image obtained by reducing the pixel values of an input image and an operation for converting the intermediate image to an image of a second color gamut according to an exemplary embodiment of the present invention.

A color gamut 302 indicates a first color gamut. The first color gamut may be the color gamut of an input image.

In the current exemplary embodiment, in the case of a color gamut of an image obtained by an image pickup apparatus supporting the xvYCC format, the color gamut 302 may be that of the xvYCC format.

A color gamut 304 indicates a second color gamut. The second color gamut may be the color gamut which a display apparatus can reproduce.
In the current exemplary embodiment, the display apparatus may use at least one of a liquid crystal display (LCD), plasma display panel (PDP), and a cathode ray tube (CRT). When a signal format supported by the display apparatus is an sRGB format, the color gamut 304 may be that of the sRGB format.

Referring to FIG. 3, w₁ indicates the luminance of a white color component of a signal of an input image, and w₂ indicates the brightness of a white color component of the display apparatus. Only colors within the color gamut 304 in which w₁ and w₂ match, can be accurately reproduced in the display apparatus.

For example, it is assumed that the signal format of an input image is xvYCC and the signal format supported by the display apparatus is sRGB. Though converting of the xvYCC into sRGB through calculation is possible, the signal of the xvYCC format has values in a range that cannot be expressed by the sRGB format. The colors in an area outside the color gamut cannot be expressed or cannot be correctly expressed.

A color gamut 306 is the color gamut of an intermediate image obtained by reducing an input image with a wide color gamut in order that the display apparatus can reproduce the input image.

As the white color component w₁ of the input image is reduced to w₁', the color gamut 304 in which color can be accurately reproduced in a related art display apparatus is reduced to a color gamut 308.

In the current exemplary embodiment, in order to reduce an input image signal with a wide color gamut to a signal with a color gamut that can be reproduced by the display apparatus, the signal is linearly reduced by a reduction variable α. In this case, α is determined as a value obtained experimentally in the range 0< α <1. Since the color information and luminance information of an input image are expressed by pixel values, the pixel values of the input image are reduced by α. In this case, the pixel values should be reduced linearly while the bottom corner of the color gamut rectangle indicating the black color component is fixed.

Accordingly, since the ratio of the part of the reduced color gamut 306 of the intermediate image included in the color gamut 304 of the display apparatus, to the whole color gamut 306 is relatively higher than the ratio of the part of the color gamut 302 of the input image with the wide color gamut included in the color gamut 304 which the display apparatus can reproduce, to the whole color gamut 302 of the input image, the reduced color gamut 306 of the intermediate image can reproduce richer colors.

FIG. 4 is a diagram illustrating an area in which a difference between the pixel values before and after reduction of an input image occurs according to an exemplary embodiment of the present invention.

FIG. 4 relates to an operation for generating an intermediate image obtained by reducing the pixel values of an input image and an operation for converting the intermediate image to an image of a second color gamut.

Color gamuts 402 through 408 correspond to color gamuts 302 through 308.

That is, the color gamut 402 indicates the first color gamut, and may be the color gamut of an input image.

The color gamut 404 indicates the second color gamut, and may be the color gamut which a display apparatus can reproduce.

The color gamut 406 is the color gamut of an intermediate image obtained by reducing an input image of the first color gamut which is a wide color gamut, in order that the display apparatus of the second color gamut can reproduce the input image of the first color gamut.

As the white color component w₁ of the input image is reduced to w₁' according to the reduced color gamut, the color gamut 404 in which color can be accurately reproduced in a related art display apparatus is reduced to a color gamut 408.

A color gamut 410 is a part which is outside the color gamut 404 before the reduction of the color gamut 402 of the input image, but according to the reduction of the color gamut 402 of the input image, is included in the color gamut 404 after the reduction. As a result, the color gamut 410 can be reproduced by the display apparatus.

Accordingly, for example, as the color gamut 402 is reduced, a point X originally positioned outside the color gamut 404 becomes a point X' which is included in the color gamut 404 due to the reduction of the color gamut 402 of the input image, and therefore the display apparatus can reproduce the point X'. The color gamut 410 is the color gamut of the points that were not originally included in the color gamut of the display apparatus such as the point X. As the color gamut 410 is generated, the method of displaying an image with a wide color gamut according to the current exemplary embodiment can express colors in the color gamut that cannot be defined in the related art display apparatus. Accordingly, a richer color gamut can be reproduced.

According to the current exemplary embodiment, after the input image signal with a wide color gamut is reduced so that the color gamut can be reduced, an operation for converting the signal to a signal format that the display apparatus can support is necessary. In this case, an example of the signal format for the display apparatus is sRGB.

If the color gamut of the input image is not reduced, the color information of the input image cannot be reproduced by the display apparatus at this stage, thereby damaging much color information by clipping or mapping. However, if the color gamut of the signal is reduced according to the current exemplary embodiment, much more color information is included in a color gamut that can be reproduced by the display apparatus, and can be better preserved in the conversion operation of the signal format.

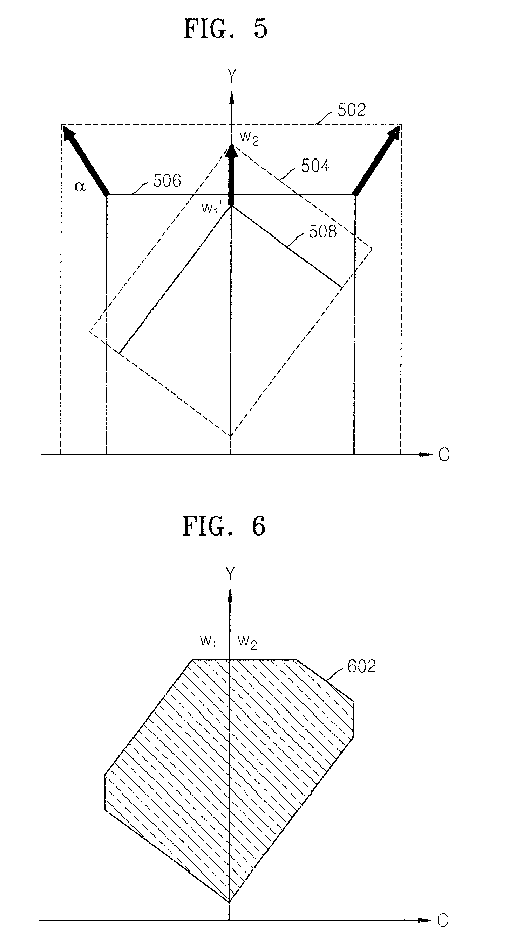

FIG. 5 is a diagram illustrating a process of increasing luminance of a converted image by increasing the brightness of a display apparatus according to an exemplary embodiment of the present invention.

FIG. 5 relates to an operation for displaying a converted image on a display apparatus and an operation for adjusting the brightness of the display apparatus.

A color gamut 502 is the color gamut obtained by compensating the luminance of the reduced color gamut of a converted image which is reduced by the reduction of the color gamut, by increasing the brightness of a display apparatus.

A color gamut 504 shows that the reduced luminance of the converted image is expanded to the extent that the display apparatus can be reproduced, by increasing the brightness of the display apparatus.

The color gamut 506 is the color gamut obtained by reducing the color gamut of the input image. That is, the color gamut 506 corresponds to the color gamut 306 and the color gamut of an intermediate image.

The color gamut 508 is the color gamut in which the luminance of the white color component of the input image matches the white color component of the color gamut of the display apparatus, that is, the color gamut obtained by reducing the limit range of the color gamut that can be reproduced by a related art display apparatus, according to the current exemplary embodiment. That is, the color gamut 508 corresponds to the color gamut 308. Here, w₂ indicates the brightness of the white color component of the color gamut that can be reproduced by the display apparatus, and w₁' indicates the luminance of the white color component of the reduced input image.

In the current exemplary embodiment, in order to include the wide color gamut of the input image in the color gamut that can be reproduced by the display apparatus, and thereby to reproduce the wide color gamut in the display apparatus, the pixel values of the input image are reduced. As a result, a richer color gamut can be expressed in the display apparatus. However, since the magnitude of the luminance component is reduced in the reduction process, the converted image becomes darker as a whole. Accordingly, an operation for adjusting the luminance for improvement of the performance is necessary.

In the current exemplary embodiment, the brightness of the display apparatus is adjusted in order to adjust the luminance. By increasing the brightness of the display apparatus, the reduced luminance of the converted image is expanded to the extent of the luminance of the color gamut that can be reproduced by the display apparatus. This effect is illustrated as the color gamut 504. That is, the brightness of the display apparatus itself is adjusted so that w₁' is expressed with the brightness of w₂. Accordingly, the problem that the luminance of the input image is reduced due to the reduction of the color gamut of the input image, and as a result the converted image is darkened as a whole can be solved.

In the operation for reducing the color gamut of the input image, if the color gamut is reduced linearly by α wherein 0< α <1, a desired result can be obtained by increasing the brightness of the display apparatus by α. In this case, the brightness should be increased linearly while the bottom corner of the color gamut rectangle representing the black color component is fixed.

A variety of methods can be used in order to increase the brightness of the display apparatus. If the display apparatus uses an LCD using a backlight, the brightness can be increased by adjusting the strength of the light source of the backlight. Also, if the display apparatus uses a CRT, the brightness of the display apparatus can be increased by adjusting the amount of electrons. In the case of a display apparatus using a PDP, the brightness of the display apparatus can be increased by adjusting the voltage provided to the PDP. In the current exemplary embodiment, the brightness should be increased, and therefore, the strength of the light source of the backlight or the amount of electrons or the voltage should be increased.

In order to correct the luminance component of the converted image which is reduced together with the reduction of the color gamut, the luminance component of the pixel values of the image signal may also be increased. However, if the luminance component of the pixel values of the converted image is directly increased, it is subjected to the limit of the color gamut of a signal format that the display apparatus can support. This reintroduces the problem which the present invention is intended to solve. Also, if only the luminance component is increased, the chrominance component is deformed and a damaged color is output.

Accordingly, in the current exemplary embodiment, the brightness of the display apparatus is increased, thereby increasing the luminance of the converted image in a compensating manner. As a result, the loss of the luminance component of the image is compensated for and at the same time, the signal of the converted image is linearly increased, thereby allowing the color information to be maintained. Accordingly, with less damage to the color information, the compensation can be performed.

FIG. 6 is a diagram illustrating a result in which a color gamut is expanded by increasing the brightness of a display apparatus according to an exemplary embodiment of the present invention.

FIG. 6 relates to an operation for displaying a converted image on a display apparatus and an operation for adjusting the brightness of the display apparatus.

As in FIG. 5, w₁' indicates the luminance of the white color component which is reduced by reducing the color gamut of the input image, and w₂ indicates the brightness of the white color component in the limit of the color gamut that can be reproduced by the display apparatus.

As illustrated in FIG. 6, by increasing the brightness of the display apparatus so that w₁' can match with w₂, the loss of the luminance is compensated for. As a result, the color gamut which can be reproduced by the display apparatus becomes wider than the color gamut of the existing rectangle having w₂ as a vertex or an angular point, thereby allowing richer colors to be expressed.

According to related art methods of adjusting the color gamut based on a color mapping technique, there is a tendency that the color of the adjusted image of an image signal having a higher luminance component is mapped while being slanted with respect to the white color component, and therefore the expression of colors become inaccurate. Also, in the related art methods based on the clipping technique, the color information is removed, thereby causing serious damage to the color information.

Compared to the related art methods of mapping colors outside the color gamut of a display apparatus to colors within the color gamut of the display apparatus by using the clipping or mapping, the current exemplary embodiment of the present invention can express more accurate colors because the color gamut is linearly adjusted.

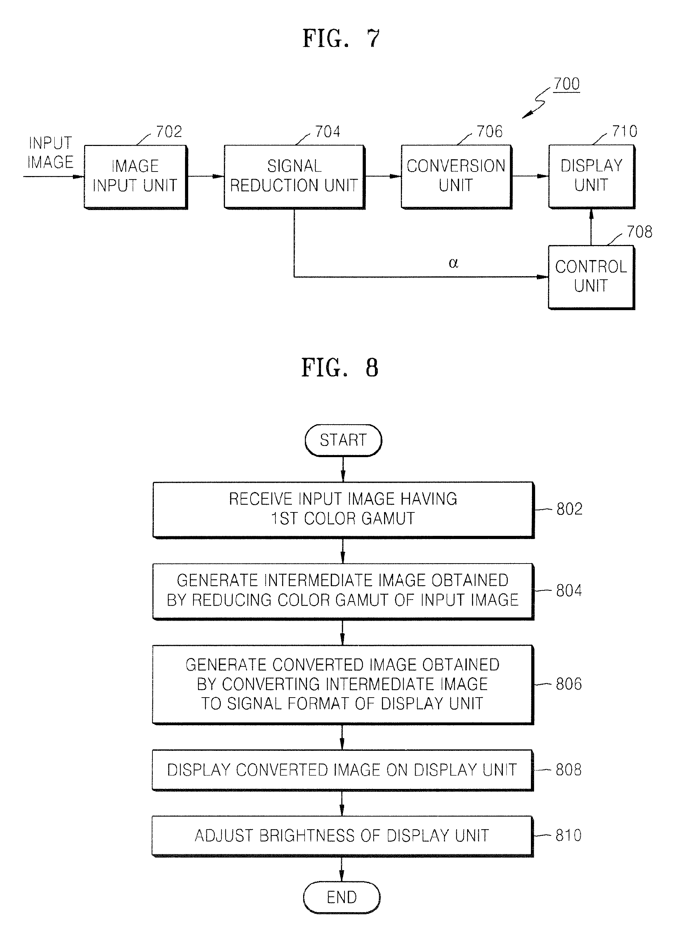

FIG. 7 is a diagram illustrating an apparatus for displaying an image with a wide color gamut according to an exemplary embodiment of the present invention.
The apparatus 700 for displaying an image with a wide color gamut includes an image input unit 702, a signal reduction unit 704, a conversion unit 706, a control unit 708, and a display unit 710.

The apparatus 700 for displaying an image with a wide color gamut receives an input of an image with a first color gamut, and displays the image on the display unit 710 with a second color gamut. In the current exemplary embodiment, the first color gamut is wider than the second color gamut.

The image input unit 702 receives the input image and outputs the input image to the signal reduction unit 704. In the current exemplary embodiment, the input image has a format having a color gamut wider than the color gamut that the display unit 710 can express. For example, the input image may comply with an xvYCC signal format.

The signal reduction unit 704 receives the input of the input image from the image input unit 702, processes the input image to generate an intermediate image, and outputs the intermediate image to the conversion unit 706. The intermediate image is generated by reducing the pixel values of the input image. Also, a reduction variable α is transferred to the control unit 708.

If the color gamut of the input image is wider than the color gamut that can be reproduced by the display unit 710, the signal reduction unit 704 reduces the color gamut of the input image so that the color gamut of the input image can be included in more of the color gamut of the display unit 710. In this case, since the pixel values of the image include luminance and chrominance information, the pixel values are reduced.

The conversion unit 706 converts the intermediate image input from the signal reduction unit 704 into a signal format that can be supported by the display unit 710, and outputs the converted image to the display unit 710.

For example, if the input image has an xvYCC format, the format is converted into an sRGB format so that the image can be expressed by the display unit 710 having an LCD panel. In this case, since the converted image is the image of which color gamut is reduced in the signal reduction unit 704, the luminance is also reduced and the image is darkened as a whole even though the color gamut that can be reproduced by the display unit 710 has been widened.

The control unit 708 receives the reduction variable α from the signal reduction unit 704 and adjusts the brightness of the display unit 710. If the input image is linearly reduced according to α, the loss of the luminance is compensated for by linearly increasing the brightness of the display unit 710 by α.

The display unit 710 displays the converted image input from the conversion unit 706, on a display panel, and adjusts the brightness according to an instruction of the control unit 708.

When the display unit 710 uses an LCD panel using a backlight, the control unit 708 should send an instruction so that the strength of the light source of the backlight of the display unit 710 can be adjusted, i.e., can be increased in the current exemplary embodiment. Also, when the display unit 710 uses a CRT, the control unit 708 controls the display unit 710 so that the amount of electrons used in the CRT can be adjusted in order to adjust the brightness, i.e., can be increased in the current exemplary embodiment. In the case of the display unit 710 using a PDP, the control unit 708 controls the display unit 710 so that the voltage applied to the PDP can be adjusted in order to adjust the brightness, i.e., can be increased in the current exemplary embodiment.

Selectively, the display unit 710 can adjust the strength of the light source of the display unit 710 based on the α value input from the signal reduction unit 704.

As a result, the display apparatus 700 according to the current exemplary embodiment can express the input image with a wide color gamut input from the image input unit 702 without a structural change of the display apparatus itself such as replacing the display unit 710 reproducing the color gamut of the related art signal format with a display panel supporting another signal format. This is enabled by a signal processing method of reducing the color gamut of an input image and an electrical method of adjusting the brightness of a display unit.

Accordingly, without a need to replace an existing display unit with a display unit supporting a new signal format, the existing display unit can be used more economically with more efficiency.

FIG. 8 is a flowchart illustrating a method of displaying an image with a wide color gamut according to an exemplary embodiment of the present invention.

In operation 802, an input image of a first color gamut is received. For example, the input image may be an image obtained from an image pickup apparatus supporting a signal format of a wide color gamut, and the first color gamut may be a wide color gamut. In an exemplary embodiment, the input image may be an image complying with a signal format of xvYCC.

In operation 804, by reducing the color gamut of the input image, an intermediate image is generated. In the current exemplary embodiment, since the color gamut of the input image is wider than a second color gamut, the color gamut of the input image is reduced so that the color gamut of the input image that cannot be defined in the second color gamut can be included in the second color gamut.

In this case, the second color gamut is the color gamut that can be reproduced by the display apparatus. In the process of reducing the color gamut, the color gamut can be reduced by reducing the pixel values of the image.
In operation 806, the intermediate image is converted into a color signal format supported by the display apparatus, thereby generating a converted image.

When the color signal format of the input image is different from that of the display apparatus, conversion of the signal format is necessary.

In this case, though calculation for conversion is possible, the color gamut of the signal format of the input image has a part that cannot be expressed by the display apparatus, and therefore the colors in the part cannot be expressed or cannot be correctly expressed. Accordingly, adjustment of the color gamut is necessary. However, if the signal format is converted by using the intermediate image obtained by reducing the color gamut of the input image according to the current exemplary embodiment, conversion of the signal format with maintaining a richer color gamut than the color gamut obtained when the intermediate image is not used is enabled.

In operation 808, the converted image is displayed on the display apparatus. In this case, the converted image obtained by processing the signal of the input image to generate the intermediate image and by converting the intermediate image to the signal format of the display apparatus is displayed on the display apparatus.

The converted image has a richer color gamut than the original color gamut of the display apparatus, but due to loss of luminance, an image which is darker overall is output.
In operation 810, the brightness of the display apparatus is adjusted. Because this is a process to compensate for the reduced luminance, it is possible to increase the brightness. By adjusting the brightness of the display apparatus instead of directly adjusting the pixel values of the converted image, richer colors can be expressed by overcoming the limit of the color gamut of the display apparatus. Also, since the color gamut can be linearly adjusted, the color information can be maintained, thereby allowing more accurate colors to be displayed on the display apparatus.

A variety of methods of adjusting the brightness can be used according to the type of the display apparatus. When the display apparatus uses an LCD having a backlight, the strength of the light source of the backlight is adjusted. Also, when the display apparatus uses a CRT, the amount of electrons is adjusted, and when a PDP is used, the voltage is adjusted and applied. In particular, when the brightness should be increased as in the current exemplary embodiment, the strength of the light source of the backlight of the LCD, the amount of electrons of the CRT, and the voltage of the PDP are increased.

As described above, the example embodiments of the present invention provide a display method and apparatus for displaying an input image with a wide color gamut on a related art display apparatus, by which the image of a signal format having a wide color gamut can be expressed in rich and accurate colors on a display apparatus with a narrow color gamut.

In order to express an image input with a wide color gamut such as an xvYCC format, the example embodiments of present invention use a signal processing method and an electrical method of adjusting the brightness of a related art display apparatus without requiring any structural change to a display apparatus supporting a new format. Accordingly, the example embodiments of the present invention provide a more efficient and economical method.

Also, in order to reduce the color gamut of the input image with a wide color gamut using example embodiments of the present invention so that the input image can be expressed on a display apparatus, the pixel values of the input image are reduced, thereby including the input image in a color gamut that the display apparatus can reproduce. Also, in order to correct the luminance value which is reduced together as a result of the reduction of the pixel values, the brightness of the display apparatus is adjusted, thereby compensating for the loss of the luminance. Accordingly, colors of a richer color gamut than the original color gamut that can be reproduced by the display apparatus are displayed and color information is linearly processed such that more accurate colors can be expressed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying an image, the method comprising:
receiving a first image of a first color gamut (802);
generating an intermediate image by reducing pixel values of the first image (804);
converting the intermediate image into a second image of a second color gamut (806);
displaying the second image on a display apparatus (808); and
adjusting a brightness of the display apparatus (810).

2. The method of claim 1, wherein the first color gamut is wider than the second color gamut, and the adjusting the brightness of the display apparatus (810) comprises increasing the brightness of the display apparatus.

3. The method of claim 1 or 2" wherein a color format of the first image is an extended video YCC format.

4. The method of claim 1 2 or 3, wherein a color format of the second image is a standard RGB format.

5. The method of any preceding claim, wherein the generating the intermediate image (804) comprises linearly reducing the pixel values of the first image by a variable α which is greater than 0 and less than 1.

6. The method of any preceding claim, wherein the adjusting the brightness of the display apparatus (810) comprises linearly adjusting the brightness by variable α which is greater than 0 and less than 1.

7. The method of any preceding claim, wherein the display apparatus comprises one of a liquid crystal display, a cathode ray tube, and a plasma display panel.

8. The method of any one of claims 1-6, wherein the display apparatus comprises a backlight, and the adjusting the brightness of the display apparatus comprises adjusting a strength of a light output of the backlight.

9. The method of any one of claims 1-6, wherein the display apparatus comprises a cathode ray tube, and the adjusting the brightness of the display apparatus (810) comprises adjusting an amount of electrons in the cathode ray tube.

10. The method of any one of claims 1-6, wherein the display apparatus comprises a plasma display panel, and the adjusting the brightness of the display apparatus (810) comprises adjusting a voltage of the plasma display panel.

11. An apparatus for displaying an image, the apparatus comprising:
an image input unit (702) which receives a first image of a first color gamut;
a signal reduction unit (704) which generates an intermediate image by reducing pixel values of the first image;
a conversion unit (706) which converts the intermediate image into a second image of a second color gamut;
a display unit (710) which displays the second image on a display apparatus; and
a control unit (708) which adjusts a brightness of the display unit.

12. The apparatus of claim 11, wherein the first color gamut is wider than the second color gamut, and the control unit (708) increases the brightness of the display unit.

13. The apparatus of claim 11 or 12, wherein a color format of the first image is an extended video YCC format.

14. The apparatus of claim 11, 12 or 13, wherein a color format of the second image is a standard RGB format.

15. The apparatus of any one of claims 11-14, wherein the signal reduction unit (704) generates the intermediate image, by linearly reducing the pixel values of the first image by a variable α which is greater than 0 and less than 1.

16. The apparatus of any one of claims 11-15, wherein the control unit (708) linearly adjusts the brightness of the display apparatus by a variable α which is greater than 0 and less than 1.

17. The apparatus of any one of claims 11-16, wherein the display apparatus comprises one of a liquid crystal display, a cathode ray tube, and a plasma display panel.

18. The apparatus of any one of claims 11-17, wherein if the display apparatus comprises a backlight, the control unit (708) adjusts a strength of a light source of the backlight.

19. The apparatus of any one of claims 11-17, wherein if the display apparatus comprises a cathode ray tube, the control unit (708) adjusts an amount of electrons in the cathode ray tube.

20. The apparatus of any one of claims 11-17, wherein if the display apparatus comprises a plasma display panel, the control unit adjusts a voltage of the plasma display panel.

21. A computer readable recording medium having embodied thereon a computer program for executing a method of displaying an image, the method comprising:
receiving a first image of a first color gamut;
generating an intermediate image by reducing pixel values of the first image;
converting the intermediate image into a second image of a second color gamut;
displaying the second image on a display apparatus; and
adjusting a brightness of the display apparatus.
